# EUROPEAN PATENT SPECIFICATION

(11) **EP 3 830 428 B1**
(45) Date of publication and mention of the grant of the patent: **27.11.2024**
(21) Application number: 19745620.5
(22) Date of filing: 01.08.2019
(51) Int. Cl.: F15B 21/048, F15B 20/00, B29C 49/42, B29C 49/46

(54) **SAFETY AIR SUPPLY UNIT**
SICHERE DRUCKLUFTVERSORGUNGSEINHEIT
UNITÉ SÉCURISÉE D'ALIMENTATION EN AIR COMPRIMÉ

(30) Priority: 01.08.2018 EP 18186758
(43) Date of publication of application: 09.06.2021
(73) Proprietor: Norgren AG, 8370 Sirnach (CH)
(72) Inventor: JORDAN, Marko, 8370 Sirnach (CH); SCHMID, Daniel, 8370 Sirnach (CH); STUDER, Roger, 8370 Sirnach (CH)
(74) Representative: Whitfield, Jack Stephen
(86) International application number: PCT/EP2019/070813
(87) International publication number: WO 2020/025766

(56) References cited:
- EP-A1- 1 325 236
- EP-A1- 3 009 252
- US-A1- 2010 269 926
- US-A1- 2011 277 843

## Description

### TECHNICAL FIELD

The present invention relates to an air supply unit for high pressure applications, particularly but not exclusively for stretch blow molding machines.

### BACKGROUND

Pneumatic systems using compressed air for actuation of different functions typically include an air supply unit, which is designed to treat the compressed air before introducing it into the pneumatic system. In particular, compressed air is usually required to be filtered and pressure regulated before it can be admitted into the distributors and actuators of the system. One example of an application in which an air supply unit is commonly required is stretch-blow molding (SBM), used for the production of containers, especially bottles, from plastic pre-forms.

Stretch-blow molding can be used in a variety of applications. However, one of the most likely used applications is in the production of polyethylene terephthalate (PET) products, such as drinking bottles. Typically, a stretch-blow molding process includes applying low pressured air via a pre-blow valve block, along with actuation of a stretch rod, during a so-called "pre-blow phase", to stretch the pre-form in a longitudinal direction and radially against walls of a mold. The stretch-blow molding process next uses high-pressured air supplied by the air supply unit, during a main blowing phase, to further expand the pre-form into the blow mold. The resulting product is generally hollow with an exterior shape conforming to the shape of the mold cavity. The stretch-blow molding process may further include a cold set stage during which cool air is introduced into the pre-form from a cooling valve and recovered by a recovery valve. This stretch-blow molding process is repeated for container and commonly has a cycle times in the order of seconds.

It will be appreciated that the air supply unit is a vital part of any high-pressure pneumatic system and particularly any stretch-blow molding process. Known air supply units are large and complex assemblies of various valves, filters and other functional parts. Thus, common air supply units are big in size and difficult to service. Often functional parts of the air supply units are positioned in hard to reach places. Moreover, the large size and positioning problems of the functional parts leads to poor aesthetic appearance, particularly when combined with ever smaller pneumatic systems.

Known systems are often depressurised manually. Manual depressurisation is achieved by placing manual valves in areas that will remain under high pressure after the system is closed off. For example, between stop-fill valves, upstream of stop-fill valves, and upstream of exhaust valves. An air supply unit must be depressurised between uses to prevent any build-up of dangerous high pressure air pockets within the system which could damage the apparatus and the operator.

Position sensors are commonly used to measure the position of a valve in air supply systems. Commonly the position sensors comprise of a Hall sensor and a magnet. If a valve were partially open, for example by 0.02 mm due to some dirt or grit in the valve, the position sensor would not be accurate enough to detect it as being open. The position sensor would still detect the valve as being closed. Even with this small gap of 0.02 mm highly pressurised air can still flow. This gap, and the high pressure air, are a potential hazard which may injure an operator.

A further main concern is the safety of existing air supply units and the machinery connected thereto. Particularly in high-pressure applications, such as stretch blow moulding systems, failure to exhaust compressed air in a fast and reliable manner can cause injury to the operator. Safety requirements for these operations can be found in the EN422:2009 standard. EN422:2009 outlines guidelines for the protection of people using high pressure air applications. For example, when operators open service doors of the high pressure system, it is paramount that pressurised air is vented before the access door or flap is opened. Furthermore, it is important to ensure that no further pressurised air can be supplied for as long as the system is being serviced, even in a failure situation. Known systems apply pressure regulators to ensure that pressurised air is exhausted before the operator gains access to the system. However, this known safety feature heavily relies on the correct function of one or more pressure regulator valves and is not available should one or more of the regulator valves fail. Document US2011/0277843 discloses an air supply unit according to the preamble of claim 1.

In view of the aforementioned problems, it is an object of the present invention to provide an air supply unit for high pressure applications, which has a simple, more compact design and is safe to use.

### SUMMARY OF THE INVENTION

Aspects and embodiments of the invention provide an air supply unit for high-pressure applications as claimed in the appended claims.

### Statements of invention:

According to a first aspect of the invention there is provided an air supply unit for high pressure applications according to claim 1.

The air supply unit may be used in high pressure applications of up to 40 bar. The air supply unit may be used in high pressure applications greater than 40 bar. As will be appreciated, the first pilot valve can operably control both the shut-off valve and the exhaust valve. The first pilot valve is electrically actuated and is connected to a working pressure gas system which provides a pilot fluid to actuate the shut-off valve. This pilot fluid may be at 40 bar. The pilot fluid may be a low pressure gas, for example at 5-8 bar. When the shut-off valve is in an open position allowing the passage of air to the air outlet and the exhaust valve is shut preventing air from leaving the air supply unit. When the shut-off valve is shut the exhaust valve is open allowing air in the air supply system to be exhausted. The first pilot valve controlling both of the components reduces the number of components required to safely operate the air supply unit. This reduced number of components reduces the likelihood of failure of the air supply unit as there are less components that could break in operation. Controlling both the shut-off valve and the exhaust valve using a single pilot valve increases the safety of the air supply unit. The shut-off and exhaust valve may be poppet valves, ball valves or any other suitable valve. A second shut-off valve may be arranged between the air inlet and the air outlet of the air treatment unit. The second shut-off valve is controlled by a second pilot valve. The second pilot valve is electrically actuated and is connected to a working pressure gas source which provides a pilot fluid to actuate the second shut-off valve. This pilot fluid may be at 40 bar. The pilot fluid may be a low pressure gas, for example at 5-8 bar. The second shut-off valve may be arranged to move along a longitudinal valve access that is parallel to a longitudinal valve access of the first shut-off valve. In another embodiment, the two shut-off valves may have an identical construction and are received in parallel bores within the integrated air treatment unit. The bores may extend from the same surface of the integrated air treatment unit and may have substantially the same size and shape. The second shut-off valve may be arranged in parallel in both a mechanical and also a pneumatic sense. As such, the inlet and outlet ports of the two shut-off valves may be connected, providing a greater nominal diameter with minimal space requirements for the air treatment unit. Alternatively, to create redundancy, the second shut-off valve may be connected, pneumatically, in series with the first shut-off valve. In this case, the pressurised air supply could be disconnected by closing either or both of the first and second shut-off valve. Of course any number and combination of parallel and serial shut-off valves is feasible, depending on the operator's safety/air flow requirements. The second shut-off valve may be a poppet valve, a ball valve or any other suitable valve.

The air supply unit may comprise a low pressure outlet switch fluidly connected to the air outlet of the air treatment unit and configured to detect the pressure at the air outlet. The low pressure outlet switch gives an indication, by means of an output voltage, to the safe and/or unsafe operation of the air supply unit. If for example the low pressure outlet switch was switched when the shut-off valve upstream of the air outlet is supposed to be closed it would indicate that in fact the shut-off valve was in fact open. The low pressure switch may occur at 3 bar and may output a voltage of 0V. The switch may return to its unactuated position at a pressure below 2.5 bar and may output a voltage of 24 V. The reverse is also possible. The 0.5 bar difference between the two switch points prevents the switch from oscillating in a hysteresis loop which may damage the pressure switch.

The air supply unit may comprise a high pressure outlet switch fluidly connected to the air outlet of the air treatment unit and configured to detect the pressure at the air outlet. The high pressure outlet switch gives an indication, by means of an output voltage, to the safe and/or unsafe operation of the air supply unit. If for example the high pressure outlet switch was switched when the shut-off valve upstream of the air outlet is supposed to be closed it would indicate that in fact the shut-off valve was in fact open. The high pressure switch may occur at 35 bar and may output a voltage of 24 V. The switch may return to its unactuated position at a pressure below 34 bar and may output a voltage of 0 V. The reverse is also possible. The 1 bar difference between the two switch points prevents the switch from oscillating in a hysteresis loop which may damage the pressure switch.

The high and low output pressure switches may be provided in a single pressure switch. The single output pressure switch may be an analogue switch which can detect two different switch points. The pressure may be detected using mechanical, piezoelectric, or any other suitable means. The single output pressure switch may output two signal voltages, one indicating the state of the high output pressure and one indicating the low output pressure state as a function of the pressure.

The air supply unit may comprise a low pressure shut-off valve switch fluidly connected to detect the pressure between the first shut-off valve and the second shut off valve. The low pressure shut-off valve switch gives an indication, by means of an output voltage, to the safe and/or unsafe operation of the air supply unit. If for example the low pressure shut-off valve switch was switched when the first shut-off valve is supposed to be closed it would indicate that the first shut-off valve is open. The low pressure switch may occur at 1 bar and may output a voltage of 0 V. The low pressure switch may return to its unactuated position at a pressure below 0.5 bar and output a signal of 24 V. The reverse is also possible. The 0.5 bar difference between the two switch points prevents the switch from oscillating in a hysteresis loop which may damage the pressure switch.

The air supply unit may comprise a high pressure shut-off valve switch fluidly connected to detect the pressure between the first shut-off valve and the second shut off valve. The high pressure shut-off valve switch gives an indication, by means of an output voltage, to the safe and/or unsafe operation of the air supply unit. If for example the high pressure shut-off valve switch was switched when the first shut-off valve is supposed to be closed it would indicate that the first shut-off valve is open. The high pressure switch may occur at 33 bar and may output a voltage of 24 V. The low pressure switch may return to its unactuated position at a pressure below 32 bar and output a signal of 0 V. The reverse is also possible. The 1 bar difference between the two switch points prevents the switch from oscillating in a hysteresis loop which may damage the pressure switch.

The high and low shut-off pressure switches may be provided in a single pressure switch. The single shut-off pressure switch may be an analogue switch which can detect two different switch points. The pressure may be detected using mechanical, piezoelectric, or any other suitable means. The single shut-off pressure switch may output two signal voltages, one indicating the state of the high shut-off pressure and one indicating the low shut-off pressure state as a function of the pressure.

The air supply unit comprises a slow fill valve connected to the shut-off valve and the air outlet, a throttle which controls the fluid flow rate out of the slow fill valve, a second exhaust valve connected to the outlet port of the slow fill valve and the air outlet, the second exhaust valve comprising an outlet port connected to the exhaust outlet, and a slow fill pilot valve arranged to control the slow fill valve and the second exhaust valve.

The slow fill and second exhaust valve may be poppet valves, ball valves or any other suitable valve.

The first and second exhaust valves may be provided in parallel. By providing the exhaust valves in parallel it creates a redundancy that the air supply system can still be depressurised even if one of the exhaust valves does not open.

The slow fill valve and the slow fill valve throttle allows for a gradual increase in the pressure at the outlet rather than an instantaneous high pressure being output. The gradual ramping up in pressure prevents potentially dangerously high pressures flowing through the air outlet instantaneously. Controlling both the slow fill valve and the second exhaust valve using a single slow fill pilot valve increases the safety of the air supply unit and provides better protection for people. When the slow fill valve is closed the second exhaust will immediately open reducing the pressure in the system.

The first and second exhaust valves of the air supply unit may be arranged in parallel with each other. If one of the exhaust valves fails in use than the other can still safely depressurise the air supply unit. The exhaust valve may be a normally open valve. If a power failure occurs the exhaust valve will return or stay, respectively in its default open state, thereby safely venting the pressurised air.

The first and second shut-off valves of the air supply system and the first and second pilot valves may be provided in a normally closed position. Normalising the first and second shut-off and first and second pilot valves in a closed position increases the safety of the air supply unit. This closed normal position makes the system always return to the safest mode. If any electrical power or gas pressure is lost to the system so that the pilot valves cannot be used to actuate the shut-off valves, the shut-off valves may shut automatically. This may prevent any high pressure air continuing to flow through the system.

When the first shut-off valve and first pilot valve are closed the exhaust will immediately open reducing the pressure in the system. Exhausting the air supply unit means that when operation of the air supply unit is finished it is always returned to atmospheric pressure. This operation returns the air supply unit to a non-dangerous low-pressure state. There may be no pockets of high pressure air in the fluid lines of the air supply unit which may be hazardous to an operator or could potentially damage the machinery itself.

The slow fill valve and slow fill pilot valve of the air supply system may be provided in a normally closed position. Providing the slow fill valve and slow fill pilot valve in a shut position increases the safety of the air supply unit. This closed normal position makes the system always fail in the safest mode. If any power is lost to the system so that the pilot valves cannot be used to actuate the slow fill valve the slow fill valve may shut automatically. This may prevent any high pressure air continuing to flow through the system.

When the slow fill valve and slow fill pilot valve are closed the second exhaust valve will immediately open reducing the pressure in the system. Exhausting the air supply unit means that when operation of the air supply unit is finished it is always returned to atmospheric pressure. This operation returns the air supply unit to a non-dangerous low-pressure state. There may be no pockets of high pressure air in the fluid lines of the air supply unit which may be hazardous to an operator or could potentially damage the machinery itself.

The normally closed position used to make the valves return to a closed position may be provided by a spring and/or air pressure in one or more fluid lines which are connected to the inlet of the first and second shut-off valves and/or the slow fill valve. The use of both air pressure and a spring to provide means to normally return the valves to a closed position may provide an additional redundancy in case of either the spring failing or the fluid line being blocked. Having both of these features may increase the safety of the air supply unit.

The first and second shut-off valves, first and second exhaust valves, and the slow fill valve may be located in a valve block. The first and second shut-off valves, first and second exhaust valves, and the slow fill valve may be integral to the valve block. The valve block containing the first and second shut-off valves, first and second exhaust valves, and the slow fill valve may provide a compact assembly in the air supply unit. The compact assembly reduces the number of components required to use the air supply unit, which reduces the number of components that may fail and thus increases the reliability of the air supply unit. In particular it replaces connecting tubes or pipes with internal fluid passages which dramatically reduce the failure rate.

The pilot valves and the pressure switches may be located on the outside of a valve block of the air supply unit. Providing these components on the outside of the valve block allows them to be easily accessed, serviced and/or replaced. Pilot valves and pressure switches are relatively cheap to manufacture. Locating these components on the outside of the valve block allows them to be replaced without replacing the whole valve block or air unit assembly.

According to another aspect of the invention there is provided a method of self-testing the safety of an air supply machine comprising the steps of:
actuating the first pilot valve in a predetermined sequence for a predetermined time;
actuating the second pilot valve in a predetermined sequence for a predetermined time;
actuating the slow fill pilot valve in a predetermined sequence for a predetermined time;
measuring the pressure between the first and second shut off valves using a low pressure switch at each step in the sequence and recording it as a first data set;
measuring the pressure between the first and second shut off valves using a high pressure switch at each step in the sequence and recording it as a second data set;
measuring the pressure at the air outlet using a low pressure switch at each step in the sequence and recording it as a third data set;
measuring the pressure at the air outlet using a high pressure switch at each step in the sequence and recording it as a fourth data set;
comparing the first, second, third and fourth data set to a test data set wherein the test data set gives measurements of safe operation;
indicating to an operator that the air supply unit is safe to use if the first, second, third and fourth data sets match the test data set;
indicating to an operator that the air supply unit is unsafe to use if the first, second, third and fourth data sets do not match the test data set.

The method tests whether the air supply system is safely depressurised after each cycle. The method of checking the safety of the air supply unit can be performed before each use of the air supply unit when it is first switched on. The steps can be used to check that the air supply unit is safe to use. Or, conversely, whether the air supply unit is not safe to use. If the air supply unit passes the safety test then the air supply unit can be operated. If the air supply unit fails the safety test then the air supply unit may not be operated. The operator may be prevented from using the device until a part is replaced and/or the air supply unit has been checked by a service person.

The sequence of method steps is predetermined and standardised by the manufacturer. The pilot valves in the air supply unit are actuated and the pressure at the output and between the first and second shut-off valves are measured. In this way the valves can be checked to see if they are: open, shut, or partially open. Pressure switches are advantageous over position sensors as if a valve were open by only a small magnitude, for example by 0.02 mm, then a position sensor would not be able to measure this. A pressure sensor however would be able to measure to pressure resulting from the fluid flow through this 0.02 mm gap.

By using a known test data set that the output of test can be compared against the ideal conditions known in the test data set. The test data set acts as an operational check list that a controller (such as a computer or other control device) and/or an operator know that the air supply unit is safe to use.

The method of testing the safety of an air supply unit can comprise the following predetermined sequence and predetermined times of:
- Starting with the first and second pilot valves and the slow fill valve in a closed position;
- Opening the first pilot valve after 200 ms;
- Closing the first pilot valve after 350 ms;
- Opening the first pilot valve after 100 ms;
- Opening the slow fill valve after 100 ms;
- Closing the slow fill pilot valve after 500 ms;
- Opening the slow fill pilot valve after 150 ms;
- Opening the second pilot valve after 500 ms;
- Closing the second pilot valve after 300 ms;
- Closing the first pilot valve after 500 ms;
- Closing the slow fill pilot valve after 500 ms.

This predetermined sequence and steps can be used to check that the air supply unit is safe to operate.

According to another aspect not within the scope of the claims, there is provided an air supply unit for high-pressure applications, comprising an integrated air treatment unit with an air inlet, an air outlet, and an exhaust port. The air supply unit comprises a filter unit for treatment of pressurised air, the filter unit being arranged between the air inlet and the air outlet. At least one shut-off valve is provided having an inlet port connected to the air inlet and an outlet port connected to the air outlet of the integrated air treatment unit. The air supply unit also comprises an exhaust valve having an inlet port connected to the outlet port of the shut-off valve and the air outlet of the integrated air treatment unit, said exhaust valve comprising an outlet port connected to the exhaust port of the integrated air treatment unit. The filter unit, the at least one shut-off valve and the exhaust valve form part of the integrated air treatment unit.

As will be appreciated, all of the functional parts of the air supply unit of the present invention form part of a single, integrated air treatment unit, thereby significantly reducing the size of the supply unit. A reduced size is not only required in ever decreasing space envelopes but also has a more aesthetically pleasing appearance. The exhaust valve is connected to an outlet port of the shut-off valve and may thus quickly vent pressurised air passing the shut-off valve in a failure scenario. At the same time, the exhaust valve is connected to the air outlet of the integrated air treatment unit. As such, the exhaust valve can also be used to vent pressurised air supplied to elements of the air supply unit, which are not part of the integrated air treatment unit, as will be described in more detail below. In other words, the exhaust valve of the air supply unit can be considered as a central air vent, which reliably ensures the safety of all parts of the air supply unit of the present invention.

In this specification, the term "integrated air treatment unit" refers to a structure, in which the individual parts are in direct contact with each other. In other words, all of the individual components of the integrated air treatment unit are connected to each other via at least one flange surface, such that there are no tubes or pipes arranged between functional parts of the "integrated air treatment unit". In other words, while the integrated air treatment may or may not be a unitary structure, fluid lines between different functional parts of the "integrated air treatment unit" will only ever be cavities of a unitary or modular structure.

According to an embodiment not within the scope of the claims, the air supply unit comprises a first pressure regulator arranged downstream of the integrated air treatment unit, an inlet of said first pressure regulator being connected or connectable to the air outlet of the integrated air treatment unit. The first pressure regulator may comprise a bypass line connecting an outlet of the first pressure regulator with the air outlet of the integrated air treatment unit. As indicated hereinbefore, the exhaust valve within the integrated air treatment unit of the air supply unit may, thus, be used to vent pressurised air at the inlet and outlet of the first pressure regulator. The first pressure regulator can, therefore, be vented on both sides even if one or more of the valves of the pressure regulator fail at any point. It will be appreciated that, while the first pressure regulator is connected or connectable to the air outlet of the integrated air treatment unit, there may be other functional parts, such as further valves or filter arranged between the air outlet of the air treatment unit and the inlet of the first pressure regulator.

In another embodiment not within the scope of the claims, the bypass line comprises a check valve configured to enable fluid flow from the outlet of the first pressure regulator towards the inlet of the first pressure regulator. The presence of the check valve will stop treated pressurised air provided at the air outlet of the integrated air treatment unit from bypassing the pressure regulator between its inlet and outlet.

In another embodiment not within the scope of the claims, the first pressure regulator comprises a pilot operated pressure regulator valve. In particular, the first pressure regulator valve may be a 2/2-way valve, the flow resistance of which can be adjusted via the input of a pilot valve. In more detail, the pressure regulator valve has a first open state, in which a pressure at its outlet port can be determined via the input of the pilot valve. In a second, closed state, the inlet and outlet ports of the pressure regulator valve are disconnected, such that no fluid flow is present at the outlet port of the pressure regulator valve. The pressure regulator valve, thus, also functions as a second safety valve of the air supply unit, in addition to the at least one shut-off valve of the air treatment unit.

In yet another embodiment not within the scope of the claims, the air supply unit comprises a second pressure regulator arranged outside of the integrated air treatment unit, an inlet of the second pressure regulator being connected or connectable to an outlet of the first pressure regulator. The second pressure regulator may comprise a bypass line connecting an outlet of the second pressure regulator with the outlet of the first pressure regulator. The configuration of the second pressure regulator may be substantially identical to the configuration of the first pressure regulator. By means of the two bypass lines, the outlet of the second pressure regulator is connected via check valves with the exhaust valve arranged as part of the integrated air treatment unit. As such, both the first and the second pressure regulator may be vented via the exhaust valve of the integrated air treatment unit.

According to another embodiment not within the scope of the claims, the at least one shut-off valve and the exhaust valve are arranged to move along parallel longitudinal valve axes. In one example, the shut-off valve and the exhaust valve may both be constructed as poppet valves, the opening and closing movements of which occur along parallel longitudinal valve axes. Arranging the shut-off valve and the exhaust valve along parallel longitudinal axes within the integrated air treatment unit results in an even more compact and simple construction of the air supply unit.

The integrated air treatment unit may comprise a valve block, housing the shut-off valve and the exhaust valve, wherein the integrated air treatment unit may further comprise a filter sleeve attached to the box-shaped valve block receiving the filter unit. The valve block may be a cast metal part or mainly machined out of a solid block of material. The valve block may be box-shaped. Attaching a removable filter sleeve to the valve block simplifies maintenance of the filter. In detail, the filter sleeve may be quickly and easily removed from and reattached to the valve block by means of a threaded connection.

The valve block may be a single piece structure. The term "single piece structure" in this specification refers to a structure that does not include any removable parts, except service caps, which are used to provide access to the functional parts housed within the valve block.

In another embodiment, the shut-off valve and the exhaust valve are received in bores extending from a first external surface of the integrated air treatment unit. In other words, both bores for the shut-off valve and the exhaust valve extend from the same external surface of the integrated air treatment unit. This arrangement reduces manufacturing times when machining the bores of the integrated air treatment unit, since the machining tools will only have to be applied on one surface of the integrated air treatment unit. Similarly, maintenance of the functional parts, such as the shut-off valve and the exhaust valve will be simplified, as access to the latter is provided via the same surface. The bores may be part of the valve block. Alternatively, the shut-off valve/valves and the exhaust valve may be received in bores arranged crosswise within the valve block. In other words, the bores may extend into the valve block from different surfaces. This crosswise arrangement may be beneficial in further reducing the size of the integrated air treatment unit.

A second shut-off valve may be arranged between the air inlet and the air outlet of the air treatment unit. The second shut-off valve may be arranged to move along a longitudinal valve access that is parallel to a longitudinal valve access of the first shut-off valve. In another embodiment, the two shut-off valves may have an identical construction and are received in parallel bores within the integrated air treatment unit. The bores may extend from the same surface of the integrated air treatment unit and may have substantially the same size and shape. The second shut-off valve may be arranged in parallel in both a mechanical and also a pneumatic sense. As such, the inlet and outlet ports of the two shut-off valves may be connected, providing a greater nominal diameter with minimal space requirements for the air treatment unit.. Alternatively, to create redundancy, the second shut-off valve may be connected, pneumatically, in series with the first shut-off valve. In this case, the pressurised air supply could be disconnected by closing either or both of the first and second shut-off valve. Of course any number and combination of parallel and serial shut-off valves is feasible, depending on the operator's safety/air flow requirements.

According to yet another embodiment, the air supply unit comprises a fill pilot valve arranged to control the at least one shut-off valve, the pilot valve comprising an inlet port connected to an outlet of the filter unit. The pilot valve may be a two/two way solenoid valve with an inlet port connected to the pressurised air supply. If two shut-off valves are provided, the fill pilot valve may be used to actuate both shut-off valves simultaneously.

The fill pilot valve may form part of the integrated air treatment unit
The air supply unit may comprise an exhaust pilot valve arranged to control the exhaust valve. The exhaust pilot valve comprising an inlet port connected to an outlet of the filter unit. Similar to the fill pilot valve, the exhaust pilot valve may, therefore, have an inlet port connected to the pressurised air source, rather than a separate pilot air supply. The exhaust pilot valve may form part of the integrated air treatment unit

The exhaust pilot valve may be a normally closed valve. The exhaust valve may be a normally open valve. As such, the exhaust pilot valve may be used to close the exhaust valve, when the system is fully operational. If an electrical power failure or a failure of the low pressure gas system occurs, the exhaust pilot valve will no longer actuate the exhaust valve, which will then move back into its default open state, thereby safely venting the pressurised air.

In another embodiment, the shut-off valve may include a pressure compensation bore extending between a first and second end of a valve piston, along the longitudinal valve axis. The shut-off valve can thus be actuated in very quick succession, substantially independent of the pressure provided by the fluid source.

### BRIEF DESCRIPTION OF THE DRAWINGS

One or more embodiments of the present invention will now be described in detail, by way of example only, with reference to the accompanying drawings, in which:
FIGURE 1 is a pneumatic diagram of an integrated air treatment unit used in an embodiment of the air supply unit, not within the scope of the claims;
FIGURE 2 is a perspective view of an integrated air treatment unit used in an embodiment of the air supply unit;
FIGURE 3A is a cross-sectional through parts of the integrated air treatment unit shown in Figure 2, along line A-A;
FIGURE 3B is a cross-sectional view of parts of the integrated air treatment unit shown in Figure 2, along lines B-B;
FIGURE 4 is a pneumatic diagram of an embodiment of the air supply unit in an embodiment of the air supply unit applied to a stretch-blow molding system, not within the scope of the claims.
FIGURE 5 is a pneumatic diagram of an air supply unit not within the scope of the claims.
FIGURE 6 is a pneumatic diagram of an embodiment of an air supply unit not within the scope of the claims.
FIGURE 7 is a pneumatic diagram of an embodiment of the air supply unit of the present invention.
FIGURE 8 is a perspective view of a valve block used in an embodiment of the air supply unit;
FIGURE 9 is a signal plan diagram showing the change in pressure in the pressure sensors as the pilot valves are actuated.
FIGURE 10 is a table showing the steps for a self-testing sequence using an embodiment of the air supply unit.

### DETAILED DESCRIPTION

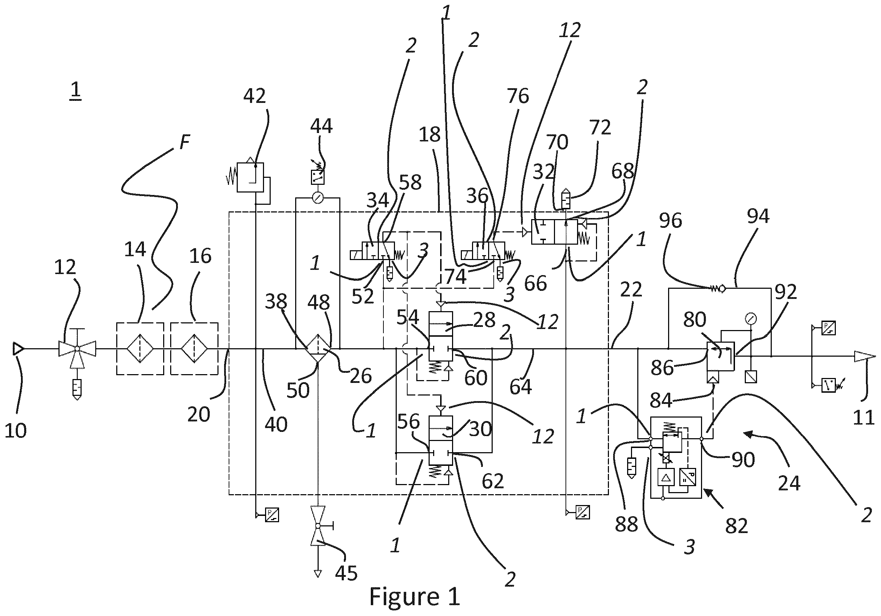

Turning to Figure 1 there is shown a schematic pneumatic diagram showing an embodiment of the air supply unit 1 not within the scope of the claims. The air supply unit comprises an inlet 10, which may be connected to a pressurised air source. Inlet 10 is connected downstream to a manual valve 12 and two optional pre-filters 14, 16. Downstream of the second pre-filter 16 there is provided an integrated air treatment unit 18 with a variety of functional parts, which will be described in more detail below.

An air inlet 20 of integrated air treatment unit 18 is connected with an outlet of pre-filter 16. An air outlet 22 of integrated air treatment unit 18 is connected to a pressure regulator 24 that is arranged downstream of the integrated air treatment unit 18.

The integrated air treatment unit 18 includes a filter unit 26, two fill valves, which are constructed as shut-off valves 28, 30, and an exhaust valve 32. A fill pilot valve 34 is arranged as part of the integrated air treatment unit 18 and provided to control opening and closing of the shut-off valves 28 and 30. An exhaust pilot valve 36 is also arranged as part of the integrated air treatment unit 18 and controls opening and closing of the exhaust valve 32.

The filter unit 26 comprises an inlet port 38, which is connected to the air inlet 20 of integrated air treatment unit 18 via fluid line 40. Although in this embodiment not part of the integrated air treatment unit 18, a pressure relief valve 42 is part of the air supply unit 1 and connected to fluid line 40 to act as excess pressure valve for the integrated air treatment unit 18. Depending on the application, the magnitude of air pressure supplied by integrated air treatment unit 18 to pressure regulator 24 may vary significantly. In a stretch-blow molding example, the air pressure supplied may reach up to 45 bar such that a pressure of around 40 bar may be provided during a main blowing phase.

A pressure gauge 44 is provided outside of integrated air treatment unit 18 and connected to the inlet port 38 on one end and the outlet port 48 at the opposite end of the filter unit 26. The pressure gauge 44 measures a pressure drop across filter unit 26 to monitor filter service requirements. If the filter unit 26 is contaminated, pressure gauge 44 will measure an increased pressure drop, which may be used to inform the operator that service of the filter is required. A filter drain valve 45 is provided outside of integrated air treatment unit 18 and connected to a drain port 50 of filter unit 26.

The outlet port 48 of filter unit 26 is connected, on the one hand, to an inlet port 52 of fill pilot valve 34 and to inlet port 74 of exhaust pilot valve 36. On the other hand, the outlet port 48 of filter unit 26 is connected to inlet ports 54 and 56 of shut-off valves 28 and 30 respectively. An outlet port 58 of fill pilot valve 34 is connected to pilot pressure faces of shut-off valves 28 and 30. An outlet port 76 of exhaust pilot valve 36 is connected to a pilot pressure face of exhaust valve 32.

The fill pilot valve 34 is a normally closed valve. As such, for as long as fill pilot valve 34 is not actuated, fill pilot 34 remains closed, resulting in no pressure being applied to the pilot pressure faces of the shut-off valves 28 and 30. The shut-off valves 28 and 30 are also constructed as normally closed valves, such that, for as long as the fill pilot valve 34 remains closed, so are shut-off valves 28 and 30. In other words, for as long as fill pilot valve 34 is in its closed state, no pressurised air will be supplied to air outlet 22 of integrated air treatment unit 18. Once the fill pilot valve 34 is actuated, the pressurised fluid acting on the pilot pressure faces of the two shut-off valve 28 and 30 will move the latter into their open state. In the open state, the inlet ports 54 and 56 of shut-off valves 28 and 30 are connected to their respective outlet ports 60, 62. Both outlet ports 60 and 62 of the shut-off valves 28 and 30 are connected to air outlet 22 via fluid line 64.

In the embodiment of Figure 1, the shut-off valves 28 and 30 are arranged downstream of the filter unit 26. The advantage of this arrangement is that only clean air will be provided to the shut-off valves 28, 30, thereby avoiding debris from entering the latter. It is, however, also possible to place the shut-off valves upstream of the filter unit 26, should this be required.

An inlet port 66 of exhaust valve 32 is also connected to the air outlet 22 of integrated air treatment unit 18 via fluid line 64. In other words, the inlet port 66 of exhaust valve 32 is connected to both outlet ports 60, 62 of the shut-off valves 28 and 30 and, at the same time, to air outlet 22 of integrated air treatment unit 18. An outlet port 68 of exhaust valve 32 is connected to exhaust port 70 of integrated air treatment unit 18. A silencer 72 is downstream of the exhaust port 70.

The exhaust valve 32 is a normally open valve, which may be actuated by exhaust pilot-valve 36. Exhaust pilot-valve 36 is a normally closed valve. An inlet port 74 of exhaust pilot-valve 36 is connected to outlet port 48 of filter unit 26. An outlet port 76 of exhaust pilot-valve 36 is connected to a pilot pressure face of exhaust valve 32. In its normally closed state, exhaust pilot-valve 36 interrupts the connection between inlet port 74 and outlet port 76, thereby not providing any pressurised fluid to the pilot pressure face of exhaust valve 32. As such, exhaust valve 32 remains open as depicted in Figure 1. As soon as exhaust-pilot valve 36 is actuated and moved into its open state, pressurised fluid acts on the pilot pressure face of the exhaust valve 32, thereby transferring the latter into its closed state. It will be appreciated that, for as long as exhaust valve 32 is in its open state, only pressurised fluid at stagnation pressure can be supplied to outlet port 22. In the example of a blow moulding system, the stagnation pressure may typically be in the region of 12-15 bar, rather than 40 to 45 as required for the main blowing phase. As such, whenever pressurised fluid is supplied to outlet port 22, exhaust pilot-valve 36 is actuated in order to close exhaust valve 32.

Treated pressurised air provided at air outlet 22 of integrated air treatment unit 18 is supplied to pressure regulator 24. Pressure regulator 24 comprises a variable pressure regulator valve 80 and pilot valve arrangement 82. An inlet port 86 of regulator valve 80 is connected to air outlet 22 of integrated air treatment unit 18. Similarly, an inlet port 88 of pilot valve 82 is connected to air outlet 22 of integrated air treatment unit 18. An outlet port 90 of pilot valve 82 is connected to pilot pressure face 84 of regulator valve 80. An outlet port 92 of the regulator valve 80 is connected to outlet 11 of air supply unit 1.

Pilot valve arrangement 82 is configured to determine an outlet pressure of regulator valve 80 via pilot pressure face 84. Depending on the magnitude of pressure applied to pilot pressure face 84 by pilot valve 82, the pressure regulator valve 80 determines the air pressure supplied to outlet 11 of air supply unit 1.

The pressure regulator 24 further comprises a bypass line 94. The bypass line 94 connects the outlet port 92 and the inlet port 86 of regulator valve 80. A check valve 96 is provided in bypass line 94. The check valve 96 stops pressurised fluid from bypassing the regulator valve 80 by flowing from its inlet 86 towards its outlet 92. However, should an air pressure applied to inlet 86 of variable relief valve 80 be lower than an air pressure on the side of outlet port 92, pressurised air may flow back to the air outlet 22 of integrated air treatment unit 18 via bypass line 94. In other words, bypass line 94 is a return line, which enables pressurised fluid on the side of outlet port 92 to be vented via exhaust valve 32.

In case of a sudden power failure of air supply unit 1, shut-off valves 28 and 30 automatically return into their closed position shown in Figure 1, thereby disconnecting air inlet 20 of integrated air treatment unit 18 from air outlet 22. At the same time, exhaust valve 32 will open and relieve pressurised air within fluid line 64. Pressurised air downstream of pressure regulator 24 will also be vented via exhaust valve 32 by means of bypass line 94. This is because once fluid line 64 is vented, there is no pressurised air supplied to inlet port 86 of regulator valve 80. At this point, pressure on the outlet port side of regulator valve 80 exceeds the pressure on the inlet port side and check valve 96 opens, enabling pressurised fluid to flow between the outlet port 92 and the inlet port 86 of regulator valve 80, ultimately venting said pressurised fluid via exhaust valve 32. As will be appreciated, due to the presence of return bypass line 94, pressure regulator 24 does not require a separate exhaust valve. Rather, exhaust valve 32 within integrated air treatment unit 18 acts as a centralised exhaust for all of the fluid lines.

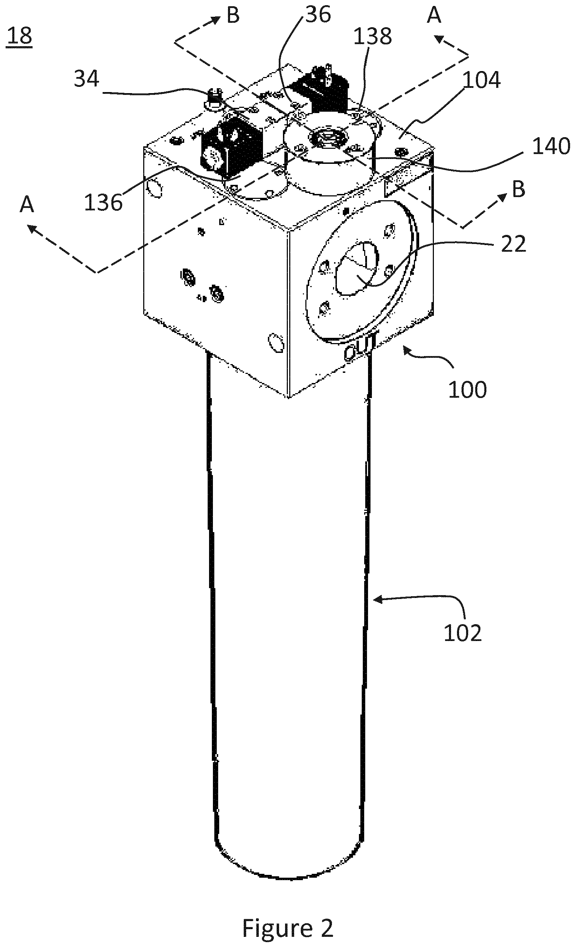

Figure 2 shows an embodiment of the integrated air treatment unit 18 schematically depicted in Figure 1. The integrated air treatment unit 18 is a compact, integrated unit including filter unit 26, the shut-off valves 28, 30, exhaust valve 32, and pilot valves 34, 36.

As shown in Figure 2, the integrated air treatment unit 18 includes a valve block 100, a filter sleeve 102 and pilot valves 34, 36. In this specification, the term "integrated air treatment unit" refers to a multi-piece structure, in which the individual parts, such as pilot valves 34, 36 and valve block 100 are in direct contact with each other, that is, fluid conduits connecting the functional parts are bores within the structure, rather than tubes connecting them. In other words, all of the individual components of the integrated air treatment unit are connected to each other with at least one contacting surface.

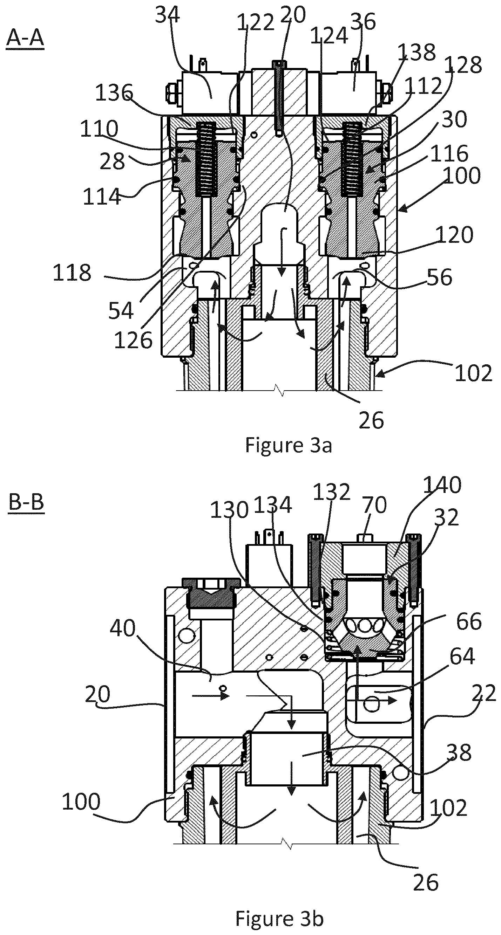

In the embodiment of Figure 2, the fill pilot valve 34 and the exhaust pilot-valve 36 re movably attached to a first exterior surface 104, such as the top surface, of the valve block 100. In particular, the pilot valves 34 and 36 may be bolted to the first surface 104 of valve block 100. In this example, the valve block 100 is box-shaped, however any other suitable shape is also feasible. As will be shown in Figures 3a and 3b, the filter sleeve 102 is removably attached to the box-shaped valve block 100 via a second, opposite, exterior surface. In particular, the valve sleeve is screwed into the bottom surface of the box-shaped valve block 100.

Turning to Figure 3a, there is shown a cross-sectional view through the upper part of the integrated air treatment unit 18 shown in Figure 2 along lines A-A. As can readily be derived from Figure 3a, the valve block 100 houses the two shut-off valves 28, 30. Although the shut-off valves 28, 30 are usually actuated at the same time, and are thus usually in the same state, Figure 3a shows the two shut-off valves 28, 30 in different states to illustrate both states at the same time. Shut-off valve 28 is in its open state, whereas shut-off valve 30 is in its closed state.

Both shut-off valves 28, 30 are biased towards their closed state by means of coil springs. The supply pressure acts on bottom surfaces 118, 120 and, at the same time, on top surfaces 122, 124 of the shut-off valves 28, 30. In the closed stage (cf. shut-off valve 30) the effective surface area of the upper surface 124 is slightly larger than the effective area of lower surface 120, resulting in a closing force acting on the respective valve piston.

The two shut-off valves include annular collars 114 and 116 respectively. The annular collars 114, 116 create upper and lower control chambers, the air pressure in which acts on annular surfaces of the collars 114, 116. If the fill pilot valve 34 is opened, the lower control chambers of both shut-off vales 28 and 30 are provided with pressurised supply air via fluid channels 126, 128. The fluid pressure acting on the lower annular surface of the annular collars 114 and 116 respectively creates a force driving the respective piston of the first and second shut-off valves 28, 30 upwards. A net force between the pressure acting on lower surface 118, 120 and the annular collars 114, 116 overcomes the closing force created by the coil spring 110, 112 and the upper surfaces 122, 124. Accordingly, the valve will open, as represented by the first shut-off valve 28 in Figure 3a.

Pressurised air enters the integrated air treatment unit 18 through air inlet 20. Fluid line 40 will guide the pressurised air towards inlet port 38 of filter unit 26. Pressurised air passing through filter unit 26 will be guided by filter sleeve 102 towards inlet ports 54 and 56 of the two shut-off valves 28, 30. Once the two fill/shut-off valves 28, 30 are open, pressurised air can flow towards air outlet 22 without any restrictions.

Referring to Figure 3b, fluid conduit 64 connects the two shut-off valves 28, 30 with the air outlet 22 and inlet port 66 of exhaust valve 32. In the illustration of Figure 3b, exhaust valve 32 is in its open position. In this case, pressurised air in fluid conduit 64 will be vented via exhaust port 70. As such, only stagnation pressure is available at air outlet 22.

The exhaust valve 32 is biased towards its open position via coil spring 130. In order to close exhaust valve 32, exhaust pilot valve 36 is opened such that pressurised air can be introduced into upper control chamber 132 formed by annular collar 134. Pressurised air in upper control chamber 132 will then act against the biasing force of coil spring 130 to close exhaust valve 32.

Turning back to Figure 3a, it will be appreciated that the first and second shut-off valves 28 and 30 have parallel longitudinal axes and move along said longitudinal axes between their open and closed position. Similarly, the exhaust valve 32 also moves along a longitudinal axis that is parallel to the longitudinal axes of the first and second shut-off valves 28, 30. A longitudinal axis of the filter unit 26 is further aligned with the longitudinal axis of the shut-off valves 28, 30 and the exhaust valve 32.

It is further derivable from Figure 3a that the first and second shut-off valves 28, 30 are both received within vertical bores extending from the first, top surface 104 of the valve block 100. Caps 136, 138 close the bores and complete the valve chambers. Similarly, as illustrated in Figure 3b, the exhaust valve 32 is received in a vertical bore extending from the top surface 104 of the valve block 100. An adaptor piece 140 is attached to the top surface 104 and engages with the exhaust valve bore. The adaptor piece 140 is configured to receive an exhaust silencer (not shown).

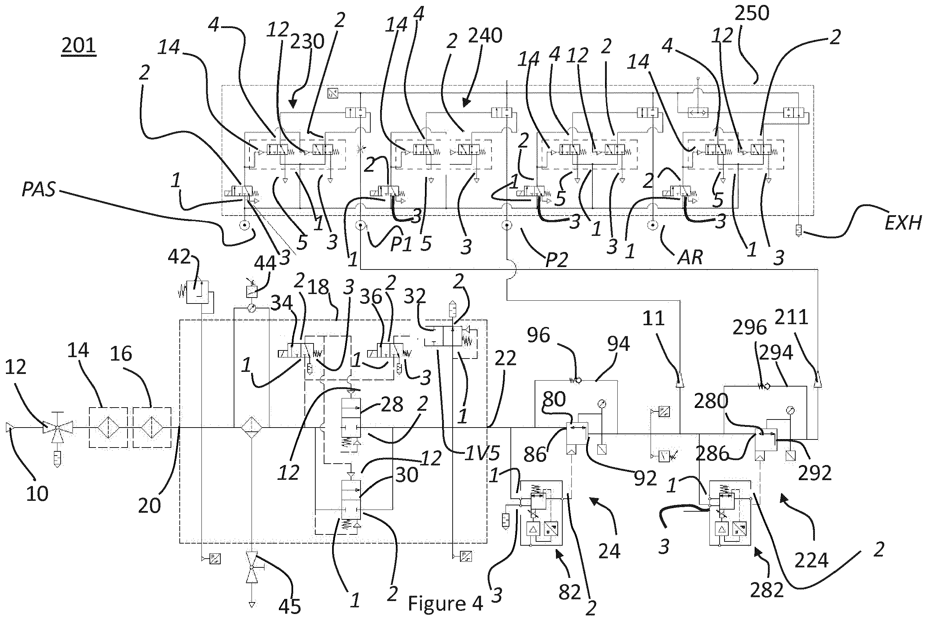

Figure 4 shows a schematic pneumatic diagram of an air supply unit according to another embodiment not within the scope of the claims.

Part of the embodiment in Figure 4 which perform an identical function as parts of the embodiment in Figure 1 are labelled with identical reference signs. The air supply unit of Figure 4 includes all of the elements described with reference to Figure 1. However, in addition, the embodiment of Figure 4 includes a second pressure regulator 224. The second pressure regulator 224 includes the same elements as the first pressure regulator 24. In particular, a second pressure regulator pilot valve 282 determines the output pressure downstream of regulator valve 280. Since the embodiment of Figure 4 has two pressure regulators, 24, 224, the air supply unit 201 has two outlets 11 and 211 at different air pressures. A first air pressure at outlet port 92 of the first regulator valve 80 is available at outlet 11, whereas a second, lower air pressure at outlet port 292 of second regulator valve 280 is available at outlet 211. The lower pressure, which may be in the region of 5 to 20 bar, may be provided from second outlet 211 to a pre-blowing valve system 230. The higher pressure at the first outlet 11, which may by in the region of 40 bar, may be provided to a main blow-molding valve system 240 of blow molding valve arrangement 250.

Similar to the first pressure regulator 24, the second pressure regulator 224 comprises a bypass line 294 with a check valve 296. As such, air pressure at the outlet port 292 of the regulator valve 280 can flow towards inlet port 286 of regulator valve 280 and outlet port 92 of regulator valve 80. Accordingly, air pressure at the outlet port 292 of the second regulator valve can also be vented by exhaust valve 32 via bypass lines 294 and 94. Exhaust valve 32, therefore, acts as a central vent for the integrated air treatment unit 18, the first pressure regulator 24 and the second pressure regulator 224.

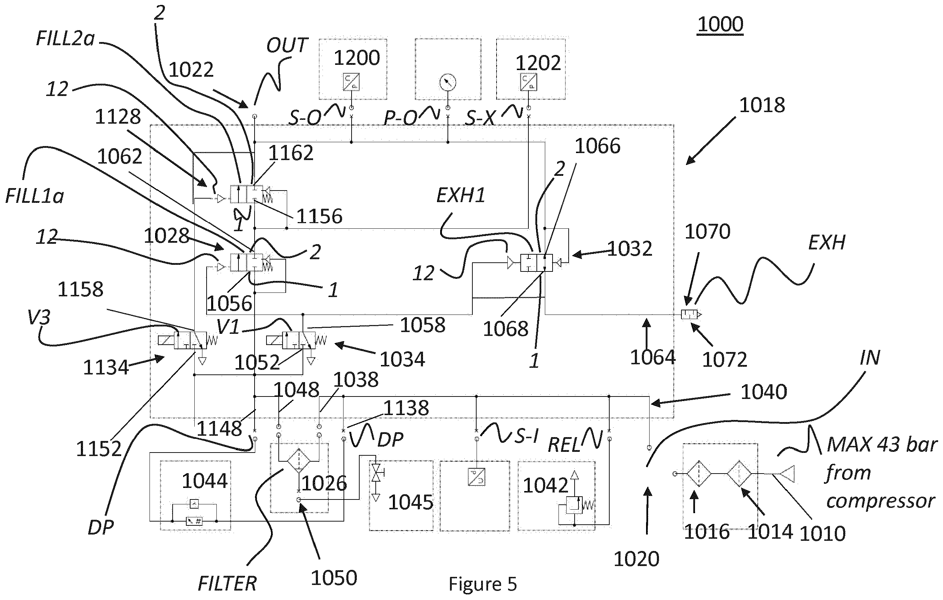

Turning to Figure 5 there is shown a schematic pneumatic diagram showing an embodiment of the air supply unit 1000 not within the scope of the claims.

The air supply unit comprises an inlet 1010, which may be connected to a pressurised air source. Inlet 1010 is connected downstream to a manual valve 12 (not shown in Figure 5, but shown equivalently in the embodiment described in figure 1) and two optional pre-filters 1014, 1016.

An air inlet 1020 of the air supply unit 1000 is connected with an outlet of pre-filter 1016. An air outlet 1022 of the air supply unit is connected to a pressure regulator 24 (not shown in Figure 5, but shown equivalently in the embodiment described in figure 1) that is arranged downstream of the air inlet 1010.

The air supply unit 1000 includes a filter unit 1026, two fill valves, which are constructed as shut-off valves 1028, 1128, and an exhaust valve 1032. A first pilot valve 1034 is arranged to control opening and closing of the shut-off valve 1128 and the exhaust valve 1032. A second pilot valve 1134 is arranged to control the opening and closing of the shut off valve 1128. The first and second shut-off valves 1028, 1128 are arranged in series with the second shut off valve 1128 being arranged between the first shut-off valve and the air outlet 1022.

The filter unit 1026 comprises an inlet port 1038, which is connected to the air inlet 1020 via fluid line 1040. A pressure relief valve 1042 is part of the air supply unit 1000 and connected to fluid line 1040 to act as excess pressure. Depending on the application, the magnitude of air pressure supplied to pressure regulator 24 may vary significantly.

In a stretch-blow molding example, the air pressure supplied may reach up to 45 bar such that a pressure of around 40 bar may be provided during a main blowing phase.

A pressure gauge 1044 is provided outside of integrated air treatment unit 1018 and connected to the inlet port 1138 on one end and the outlet port 1148 at the opposite end of the filter unit 1026. The pressure gauge 1044 measures a pressure drop across filter unit 1026 to monitor filter service requirements. If the filter unit 1026 is contaminated, pressure gauge 1044 will measure an increased pressure drop, which may be used to inform the operator that service of the filter is required. A filter drain valve 1045 is provided outside of integrated air treatment unit 1018 and connected to a drain port 1050 of filter unit 1026.

The outlet port 1048 of filter unit 1026 is connected, on the one hand, to an inlet port 1052 of first pilot valve 1034 and to inlet port 1066 of exhaust pilot valve 1032. On the other hand, the outlet port 1048 of filter unit 1026 is connected to inlet ports 1054 and 1056 of shut-off valve 1028. An outlet port 1058 of first pilot valve 1034 is connected to pilot pressure faces of shut-off valve 28. An outlet port 1058 of first pilot valve 1034 is connected to a pilot pressure face of exhaust valve 1032.

The first pilot valve 1034 is a normally closed valve. As such, for as long as first pilot valve 1034 is not actuated, first pilot 1034 remains closed, resulting in no pressure being applied to the pilot pressure faces of the shut-off valve 1028 and exhaust valve 1032. The shut-off valves 1028 and 1128 are also constructed as normally closed valves, such that, for as long as the first and second pilot valves 1034 and 1134 remain closed, so are shut-off valves 1028 and 1128. In other words, for as long as first and second pilot valves 1034 and 1134 are in their closed state, no pressurised air will be supplied to air outlet 1022 of the air supply unit. Once the first pilot valve 1034 is actuated, the pressurised fluid acting on the pilot pressure faces of the shut-off valve 1028 will move the latter into their open state. In the open state, the inlet port 1056 of shut-off valves 1028 are connected to their respective outlet port 1062. Once the second pilot valve 1134 is actuated, the pressurised fluid acting on the pilot pressure faces of the shut-off valve 1128 will move the latter into its open state. In the open state, the inlet ports 1156 of shut-off valve 1128 is connected to their respective outlet ports 1162.

The air supply unit further comprises four pressure switches 1200 and 1202: a low pressure outlet pressure switch 1200; a high pressure outlet pressure switch 1200; a low pressure shut-off valve pressure switch 1202; and a high pressure shut-off valve switch 1202.

The low pressure outlet pressure switch 1200 is fluidly connected to the air output 1022. The low pressure outlet pressure switch 1200 is configured to detect the pressure at the air outlet 1022 of the air supply assembly. The low pressure outlet switch 1200 gives an indication, by means of an output voltage, to the safe and/or unsafe operation of the air supply unit. If for example the low pressure outlet switch 1200 was switched when the shut-off valve upstream of the air outlet is supposed to be closed it would indicate that in fact the shut-off valve was in fact open. The low pressure switch may occur at 3 bar and may output a voltage of 0V. The switch may return to its unactuated position at a pressure below 2.5 bar and may output a voltage of 24 V. The reverse is also possible. The 0.5 bar difference between the two switch points prevents the switch from oscillating in a hysteresis loop which may damage the pressure switch.

The high pressure outlet pressure switch 1200 is fluidly connected to the air output 1022. The high pressure outlet pressure switch 1200 is configured to detect the pressure at the air outlet 1022 of the air supply assembly. The high pressure outlet switch 1200 gives an indication, by means of an output voltage, to the safe and/or unsafe operation of the air supply unit. If for example the high pressure outlet switch 1200 was switched when the shut-off valve upstream of the air outlet is supposed to be closed it would indicate that in fact the shut-off valve was in fact open. The high pressure switch may occur at 35 bar and may output a voltage of 24 V. The switch may return to its unactuated position at a pressure below 34 bar and may output a voltage of 0 V. The reverse is also possible. The 1 bar difference between the two switch points prevents the switch oscillating in a hysteresis loop which may damage the pressure switch.

The high and low output pressure switches 1200 may be provided in a single pressure switch 1200. The single output pressure switch may be an analogue switch which can detect four different switch points. The pressure may be detected using mechanical, piezoelectric, or any other suitable means. The single output pressure switch 1200 may output a signal voltage depending upon the pressure.

The low pressure shut-off valve switch 1202 is fluidly connected to the inlet of the second shut-off valve 1128. The low pressure shut-off valve switch 1202 is configured to detect the pressure at the inlet of the shut off valve 1128. The low pressure shut-off valve switch 1202 gives an indication, by means of an output voltage, to the safe and/or unsafe operation of the air supply unit. If for example the low pressure shut-off valve switch 1202 was switched when the first shut-off valve is supposed to be closed it would indicate that the first shut-off valve is open. The low pressure switch may occur at 1 bar and may output a voltage of 0 V. The low pressure switch may return to its unactuated position at a pressure below 0.5 bar and output a signal of 24 V. The reverse is also possible. The 0.5 bar difference between the two switch points prevents the switch 1202 from oscillating in a hysteresis loop which may damage the pressure switch.

The high pressure shut-off valve switch 1202 is fluidly connected to the inlet of the second shut-off valve 1128. The high pressure shut-off valve switch 1202 is configured to detect the pressure at the inlet of the shut off valve 1128. The high pressure shut-off valve switch 1202 gives an indication, by means of an output voltage, to the safe and/or unsafe operation of the air supply unit. If for example the low pressure shut-off valve switch 1202 was switched when the first shut-off valve is supposed to be closed it would indicate that the first shut-off valve is open. The high pressure switch may occur at 33 bar and may output a voltage of 24 V. The low pressure switch may return to its unactuated position at a pressure below 32 bar and output a signal of 0 V. The reverse is also possible. The 1 bar difference between the two switch points prevents the switch 1202 from oscillating in a hysteresis loop which may damage the pressure switch.

The high and low shut-off valve pressure switches 1202 may be provided in a single pressure switch 1202. The single shut-off valve pressure switch 1202 may be an analogue switch which can detect four different switch points. The pressure may be detected using mechanical, piezoelectric, or any other suitable means. The single output pressure switch 1202 may output a signal voltage depending upon the pressure.

In the embodiment of Figure 5, the shut-off valves 1028 and 1128 are arranged downstream of the filter unit 1026. The advantage of this arrangement is that only clean air will be provided to the shut-off valves 1028, 1128, thereby avoiding debris from entering the latter. It is, however, also possible to place the shut-off valves upstream of the filter unit 1026, should this be required.

An inlet port 1066 of exhaust valve 1032 is also connected to the air outlet. In other words, the inlet port 1066 of exhaust valve 1032 is connected to both outlet ports 1062 and 1162 of the shut-off valves 1028 and 1128 and, at the same time, to air outlet 1022. An outlet port 1068 of exhaust valve 1032 is connected to exhaust port 1070. A silencer 1072 is downstream of the exhaust port 1070.

The exhaust valve 1032 is a normally open valve, which may be actuated by first pilot valve 1034. First pilot valve 1034 is a normally closed valve. An inlet port 1052 of first pilot-valve 1034 is connected to outlet port 1048 of filter unit 1026. An outlet port 1058 of first pilot-valve 1034 is connected to a pilot pressure face of exhaust valve 1032. In its normally closed state, first pilot-valve 1034 interrupts the connection between inlet port 1052 and outlet port 1058, thereby not providing any pressurised fluid to the pilot pressure face of exhaust valve 1032. As such, exhaust valve 1032 remains open as depicted in Figure 5. As soon as first pilot valve 1034 is actuated and moved into its open state, pressurised fluid acts on the pilot pressure face of the exhaust valve 1032, thereby transferring the latter into its closed state. It will be appreciated that, for as long as exhaust valve 1032 is in its open state, only pressurised fluid at stagnation pressure can be supplied to outlet port 1022. In the example of a blow moulding system, the stagnation pressure may typically be in the region of 12-15 bar, rather than 40 to 45 as required for the main blowing phase. As such, whenever pressurised fluid is supplied to outlet port 1022, exhaust pilot-valve 1036 is actuated in order to close exhaust valve 1032.

The embodiment of Figure 5 may comprise the following features which are not shown explicitly in Figure 5 but are described here. These features are described in the embodiment shown in Figure 1 and for consistency that numbering will be adhered to. Treated pressurised air provided at air outlet 1022 is supplied to pressure regulator 24. Pressure regulator 24 comprises a variable pressure regulator valve 80 and pilot valve arrangement 82. An inlet port 86 of regulator valve 80 is connected to air outlet 1022. Similarly, an inlet port 88 of pilot valve 82 is connected to air outlet 1022. An outlet port 90 of pilot valve 82 is connected to pilot pressure face 84 of regulator valve 80. An outlet port 92 of the regulator valve 80 is connected to outlet 11 of air supply unit 1000. Pilot valve arrangement 82 is configured to determine an outlet pressure of regulator valve 80 via pilot pressure face 84. Depending on the magnitude of pressure applied to pilot pressure face 84 by pilot valve 82, the pressure regulator valve 80 determines the air pressure supplied to outlet 11 of air supply unit 1000.

The pressure regulator 24 further comprises a bypass line 94. The bypass line 94 connects the outlet port 92 and the inlet port 86 of regulator valve 80. A check valve 96 is provided in bypass line 94. The check valve 96 stops pressurised fluid from bypassing the regulator valve 80 by flowing from its inlet 86 towards its outlet 92. However, should an air pressure applied to inlet 86 of variable relief valve 80 be lower than an air pressure on the side of outlet port 92, pressurised air may flow back to the air outlet 1022. In other words, bypass line 94 is a return line, which enables pressurised fluid on the side of outlet port 92 to be vented via exhaust valve 1032.

In case of a sudden power failure of air supply unit 1000, shut-off valves 1028 and 1128 automatically return into their closed position shown in Figure 5, thereby disconnecting air inlet 1020 of integrated air treatment unit 1018 from air outlet 1022. At the same time, exhaust valve 1032 will open and relieve pressurised air within fluid line 1064. Pressurised air downstream of pressure regulator 24 will also be vented via exhaust valve 1032 by means of bypass line 94. This is because once fluid line 1064 is vented, there is no pressurised air supplied to inlet port 86 of regulator valve 80. At this point, pressure on the outlet port side of regulator valve 80 exceeds the pressure on the inlet port side and check valve 96 opens, enabling pressurised fluid to flow between the outlet port 92 and the inlet port 1086 of regulator valve 80, ultimately venting said pressurised fluid via exhaust valve 32. As will be appreciated, due to the presence of return bypass line 94, pressure regulator 24 does not require a separate exhaust valve.

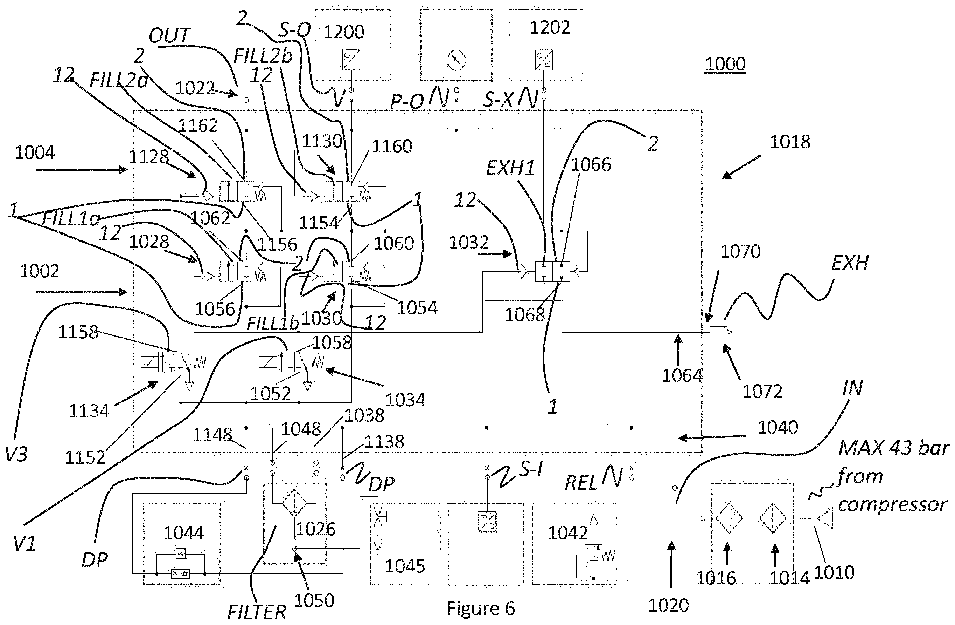

Turning to Figure 6 there is shown a schematic pneumatic diagram showing an embodiment of the air supply unit 1000 not within the scope of the claims configured substantially similar to the air supply unit 1000 of Figure 5. The air supply unit of Figure 6 further comprises a first redundant shut-off valve 1030 and a second redundant shut-off valve 1130 in comparison to Figure 5.

The first shut-off valve 1028 and first redundant shut-off valve 1030 form a first pair of valves 1002. The first pair of valves 1002 are controlled by the first pilot valve 1034.

The second shut-off valve 1128 and second redundant shut-off valve 1130 form a second pair of valves 1004. The second pair of valves 1004 are controlled by the second pilot valve 1134.

The first and second pair of shut-off valves 1002, 1004 are arranged in series and are fluidly connected by a fluid line. Opening the first pair of valves 1002 pressurises the fluid line between the first and second pair of valves.

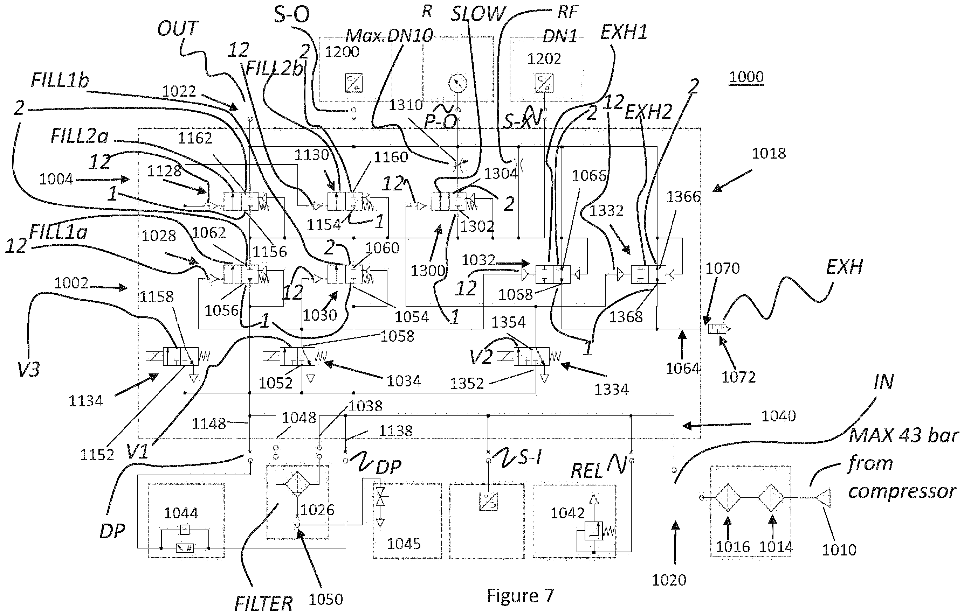

Turning to Figure 7 there is shown a schematic pneumatic diagram showing an embodiment of the air supply unit 1000 according to the present invention configured substantially similar to the air supply unit 1000 of Figure 6. The air supply unit of Figure 7 further comprises a slow fill valve 1300, a slow fill pilot valve 1334 and a second exhaust valve 1332.

The slow fill valve 1300 comprises an inlet 1302 and an outlet 1304 and a throttle 1310. The throttle may be a variable orifice which may be used to control the fluid flow out of the slow fill valve 1300.

The slow fill valve inlet 1302 is fluidly connected to an outlet of the first pair of shut off valves 1002 at the fluid line connecting the first and second pair of shut-off valves 1002 and 1004. The slow fill valve outlet 1304 and slow fill valve throttle 1310 are fluidly connected to the air outlet 1022. The slow fill valve 1300 is in a normally closed position.

The second exhaust valve 1332 has an inlet 1366 and an outlet 1368. The second exhaust valve inlet is fluidly connected to the air outlet 1022. The second exhaust valve outlet 1368 is fluidly connected to the exhaust outlet 1070. The second exhaust valve is in a normally open position.

The slow fill pilot valve 1334 has an inlet 1352 and an outlet 1354. The slow fill pilot valve inlet 1352 is fluidly connected to the outlet port of the filter 1048. The slow fill pilot valve outlet 1354 is connected to the slow fill valve 1300 and the second exhaust valve 1332 is used to operate both the slow fill valve and the second exhaust valve 1332..

The slow fill pilot valve 1334 is in a normally closed position. The slow fill pilot valve 1334 can be electrically actuated to open it. Opening the pilot valve 1334 opens the slow fill valve 1300 and closes the second exhaust valve 1332. Closing the slow fill pilot valve 1334 causes the slow fill valve 1300 to return to its normally closed position and the exhaust valve 1366 to return to its normally open position.

The normally closed/open position used to make the valves, 1300, 1332, 1332, return to a closed/open position may be provided by a spring and/or air pressure in one or more fluid lines which are connected to the inlet of the first and second stop valves and/or the slow fill valve.

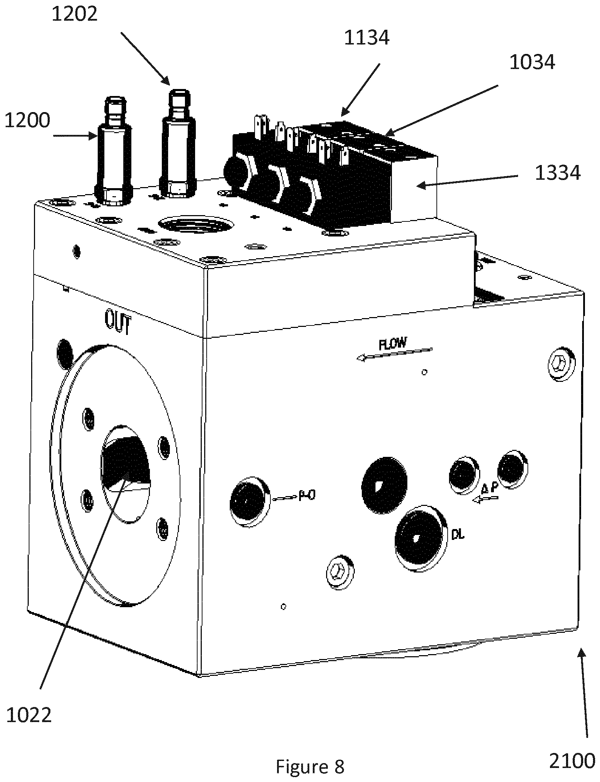

Turning to Figure 8 there is shown a perspective view of a valve block 2100 of an air supply unit 1000 substantially similar to the embodiment described in Figure 7. The valve block 2100 has an air outlet 1022, an air inlet 1020 (not shown in this view) and a filter unit connection port (not shown). The valve block 2100 may be a single component. The valve block 2100 may be several components fixed together to form a valve block.

The valve block has bores which may receive the filter unit 1026, the first and second pilot valves (24, 1134) and the slow fill pilot valve (1334), the outlet pressure switch 1200, and the shut-off valve pressure switch 1202.

The valve block 2100 has internal bores which house the first and second pairs of shut-off valves 1002, 1004, the slow fill valve 1300, and the first and second exhaust valves 1032, 1332.

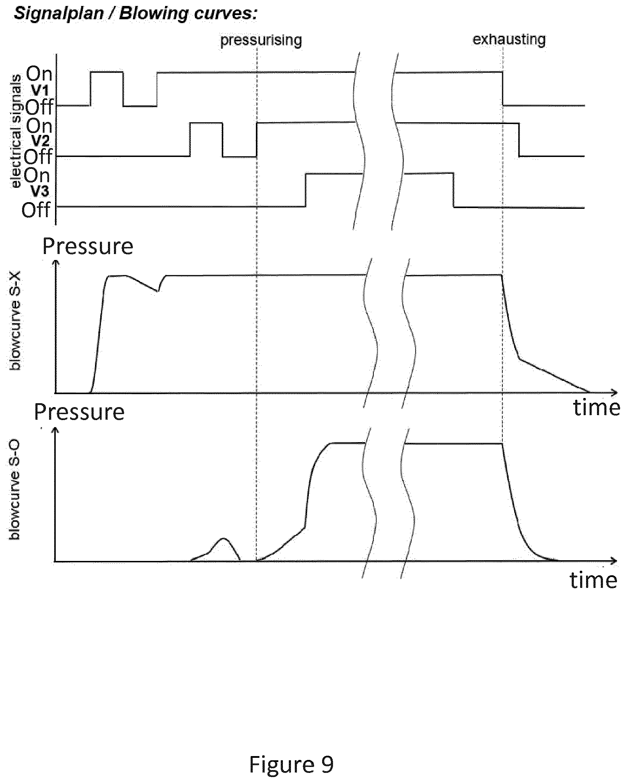

Figure 9 shows a signal plan diagram and blow curves for the method of self-testing a air supply unit 1000 substantially similar to the one disclosed in Figure 7. The diagram shows the change in electrical signal to actuate valves V1, V2 and V3, and the resulting pressure measured at the pressure switches 1200, 1202.

V1 is the signal for the first pilot valve 1034. The signal shows if the pilot valve 1034 is open (V1 = On) or off (V1 = Off).

V2 is the signal for the slow fill pilot valve 1334. The signal shows if the pilot valve 1334 is open (V2 = On) or off (V1 = Off).

V3 is the signal for the second pilot valve 1134. The signal shows if the pilot valve 1134 is open (V3 = On) or off (V1 = Off).

Blowcurve S-X describes both the low and high pressure shut-off pressure switches 1202.

Blow curve S-O describes both the low and high pressure output pressure switches 1200.

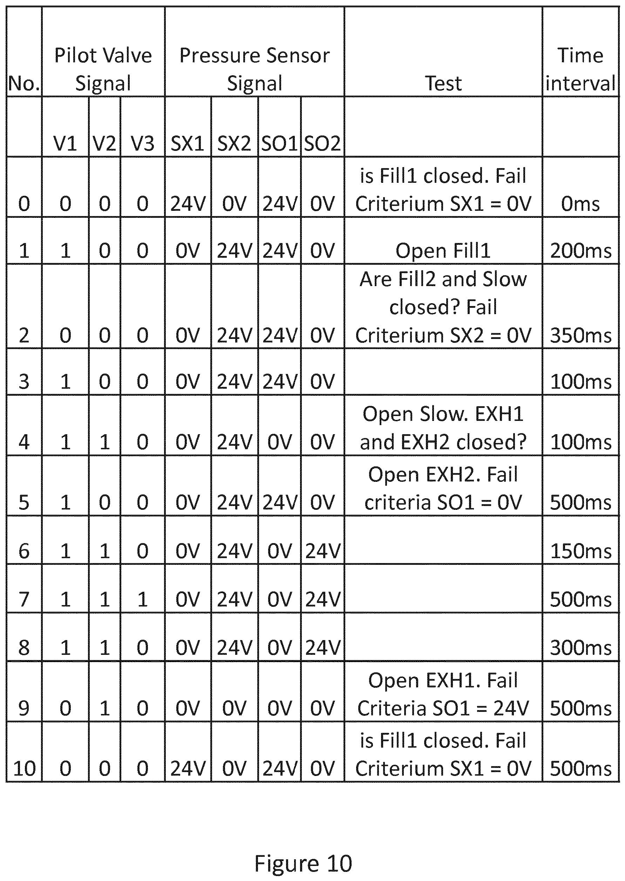

Figure 10 shows a signal plan diagram and blow curves for the method of self-testing a air supply unit 1000 substantially similar to the one disclosed in Figure 7. The diagram shows the change in electrical signal to actuate valves V1, V2 and V3, and the resulting pressure measured at the pressure switches 1200, 1202.

V1 is the signal for the first pilot valve 1034.

V2 is the signal for the slow fill pilot valve 1334.

V3 is the signal for the second pilot valve 1134.

Blowcurve S-X describes both the low and high pressure shut-off pressure switches 1202.

Blow curve S-O describes both the low and high pressure output pressure switches 1200.

Figure 10 describes a method of self-testing substantially similar to the signal plan diagram in Figure 9.

The signal SX1 and SX2 are the required output signal from the low and high pressure shut-off pressure switches 1202 respectively.

The signal SO1 and SO2 are the required output signal from the low and high pressure shut-off pressure switch 1200 respectively.

The method of the self-test involves the steps of:
0. Starting with the first and second pilot valves (1034, 1134) and the slow fill valve in a closed position (1134);
1. Opening the first pilot valve (1034) after 200 ms;
2. Closing the first pilot valve (1034) after 350 ms;
3. Opening the first pilot valve (1034) after 100 ms;
4. Opening the slow fill valve (1034) after 100 ms;
5. Closing the slow fill pilot valve (1034) after 500 ms;
6. Opening the slow fill pilot valve (1334) after 150 ms;
7. Opening the second pilot valve (1134) after 500 ms;
8. Closing the second pilot valve (1134) after 300 ms;
9. Closing the first pilot valve (1034) after 500 ms;
10. Closing the slow fill pilot valve (1334) after 500 ms.

At each step the values of SX1, SX2, SO1 and SO2 are stored as a first, second, third and fourth data set respectively. The required values of SX1, SX2, SO1 and SO2 are stored in a test data set for comparison with the self-test outputs given in the first, second, third and fourth data sets.

The test is failed at step:
0. if the SX1 signal is 0 V;
   i. this indicates that the first shut-off valve 1028 is open.
2. if the SX2 signal is 0 V;
   ii. this indicates that the second shut-off valve 1128 and/or the slow fill valve 1300 is open.
5. if the SO1 signal is 0 V;
   iii. this indicates that the second exhaust valve 1332 is not open.
9. if the SO1 signal is 24 V;
   iv. this indicates the first exhaust valve 1032 is not open.
10. if the SX1 signal is 0 V.
   v. this indicates the first shut-off valve 1028 is open.

If these criteria are all passed then a signal is indicated to the operator that the air supply unit 1000 is safe to operate.

If these criteria are not passed then a signal is indicated to the operator that the air supply unit 1000 is not safe to operate.

If these criteria are all passed then a signal is indicated to the operator that the air supply unit 1000 is safe to operate.

If these criteria are not passed then a signal is indicated to the operator that the air supply unit 1000 is not safe to operate.

## Claims

1. An air supply unit (1000) for high pressure applications, comprising:
an air inlet (1020), an air outlet (1022), and an exhaust outlet (1070);
a shut-off valve (1028) having an inlet port (1056) connected to the air inlet (1020) and an outlet port (1062) connected to the air outlet (1022);
a first exhaust valve (1032) having an inlet port (1066) connected to the air outlet (1022), wherein the first exhaust valve (1032) comprises an outlet port (1068) connected to the exhaust outlet (1070);
a pilot valve (1034) arranged to control the shut-off valve (1028);
wherein the pilot valve (1034) is configured to control the shut off valve (1028) and control the exhaust valve (1032),
**characterised in that**
the air supply unit (1000) further comprises:
a slow fill valve (1300) connected to the shut-off valve (1028) and the air (1022);
a throttle (1310) which controls the fluid flow rate out of the slow fill valve (1300);
a second exhaust valve (1332) connected to the outlet port (1304) of the slow fill valve (1300) and the air outlet (1022), said second exhaust valve (1332) comprising an outlet port (1368) connected to the exhaust outlet (1070); and
a slow fill pilot valve (1334) arranged to control the slow fill valve (1300) and the second exhaust valve (1332).

2. The air supply unit (1000) of claim 1, wherein the air supply unit (1000) comprises a second shut-off valve (1128) positioned between the first shut-off valve (1028) and the air outlet (1022);
and a second pilot valve (1134) arranged to control the second shut-off valve (1128).

3. The air supply unit (1000) of claim 1, wherein the air supply unit (1000) comprises a low pressure outlet pressure switch (1200) fluidly connected to the air outlet (1022) of the air treatment unit (1080) and configured to monitor the pressure at said air outlet (1022); and/or wherein the air supply unit (1000) comprises a high pressure outlet pressure switch (1200) fluidly connected to the air outlet (1022) of the air treatment unit (1080) and configured to monitor the pressure at said air outlet (1022).

4. The air supply unit (1000) of claim 2, wherein the air supply unit (1000) comprises a low pressure shut-off valve pressure switch (1202) fluidly connected to monitor the pressure at the inlet of the second shut-off valve (1128); and/or wherein the air supply unit (1000) comprises a high pressure shut-off valve pressure switch (1202) fluidly connected to monitor the pressure at the inlet of the second shut-off valve (1128).

5. The air supply unit (1000) of claim 1, wherein the first and second exhaust valves (1032, 1332) are arranged in parallel with each other.

6. The air supply unit (1000) of claim 2, wherein first and second shut-off valves (1028, 1128) are normally in a closed position and the first exhaust valve (1032) is normally in an open position; and/or the first and second pilot valves (1034, 1134) are normally in a closed position.

7. The air supply unit (1000) of claim 1, wherein the slow fill valve (1300) is normally in a closed position and the second exhaust valve (1332) is normally in an open position; and/or the slow fill pilot valve (1334) is normally in a closed position.

8. The air supply unit (1000) of claim 6 or 7, wherein normally closed position is provided by a spring and air pressure in at least one fluid line which is fluidly connected to the inlet of the first and second shut-off valve (1028, 1128) and/or the slow fill valve (1300).

9. The air supply unit (1000) of claim 1 or 2, wherein the first and second shut-off valves (1028, 1128) and first exhaust valve (1032) are located in a valve block (2100) and/or wherein the slow fill valve (1300) and the second exhaust valve (1332) are located in a valve block (2100);

10. The air supply unit (1000) of claim 8 or 9, wherein the pilot valves (1034, 1134, 1334) and pressure switches (1200, 1202) are located on the outside of the valve block (2100).

11. The air supply unit (1000) of claim 1 or 2, wherein the first and second shut-off valves (1028, 1128) and first exhaust valve (1032) are poppet valves; and/or wherein the slow fill valve (1300) and the second exhaust valve (1332) are poppet valves.

12. A method of testing the safety of an air supply unit (1000) according to claim 7:
actuating the first pilot valve (1034) in a predetermined sequence for a predetermined time;
actuating the second pilot valve (1128) in a predetermined sequence for a predetermined time;
actuating the slow fill pilot valve (1334) in a predetermined sequence for a predetermined time;
measuring the pressure between the first and second shut off valves (1028, 1128) using a low pressure switch (1202) at each step in the sequence and recording it as a first data set;
measuring the pressure between the first and second shut off valves (1028, 1128) using a high pressure switch (1202) at each step in the sequence and recording it as a second data set;
measuring the pressure at the air outlet (1022) using a low pressure switch (1200) at each step in the sequence and recording it as a third data set;
measuring the pressure at the air outlet (1022) using a high pressure switch (1200) at each step in the sequence and recording it as a fourth data set;
comparing the first, second, third and fourth data set to a test data set wherein the test data set gives measurements of safe operation;
indicating to an operator that the air supply unit (1000) is safe to use if the first, second, third and fourth data sets match the test data set;
indicating to an operator that the air supply unit (1000) is unsafe to use if the first, second, third and fourth data sets do not match the test data set.

13. A method of testing the safety of an air supply unit (1000) of claim 12 comprising the predetermined sequence and predetermined times of:
• Starting with the first and second pilot valves (1034, 1134) and the slow fill valve in a closed position (1134);
• Opening the first pilot valve (1034) after 200 ms;
• Closing the first pilot valve (1034) after 350 ms;
• Opening the first pilot valve (1034) after 100 ms;
• Opening the slow fill valve (1034) after 100 ms;
• Closing the slow fill pilot valve (1034) after 500 ms;
• Opening the slow fill pilot valve (1334) after 150 ms;
• Opening the second pilot valve (1134) after 500 ms;
• Closing the second pilot valve (1134) after 300 ms;
• Closing the first pilot valve (1034) after 500 ms;
• Closing the slow fill pilot valve (1334) after 500 ms.

## Patentansprüche

1. Luftversorgungseinheit (1000) für Hochdruckanwendungen, aufweisend:
einen Lufteinlass (1020), einen Luftauslass (1022) und einen Abluftauslass (1070);
ein Absperrventil (1028), aufweisend einen Einlassanschluss (1056), der mit dem Lufteinlass (1020) verbunden ist, und einen Auslassanschluss (1062), der mit dem Luftauslass (1022) verbunden ist;
ein erstes Ablassventil (1032), aufweisend einen Einlassanschluss (1066), der mit dem Luftauslass (1022) verbunden ist, wobei das erste Ablassventil (1032) einen Auslassanschluss (1068) aufweist, der mit dem Abluftauslass (1070) verbunden ist;
ein Vorsteuerventil (1034), das zum Steuern des Absperrventils (1028) eingerichtet ist;
wobei das Vorsteuerventil (1034) zum Steuern des Absperrventils (1028) und des Ablassventils (1032) konfiguriert ist,
**dadurch gekennzeichnet, dass** die Luftversorgungseinheit (1000) ferner aufweist:
ein langsames Füllventil (1300), das mit dem Absperrventil (1028) und dem Luftauslass (1022) verbunden ist;
eine Drossel (1310), die den Fluiddurchsatz aus dem langsamen Füllventil (1300) steuert;
ein zweites Ablassventil (1332), das mit dem Auslassanschluss (1304) des langsamen Füllventils (1300) und dem Luftauslass (1022) verbunden ist, wobei das zweite Ablassventil (1332) einen Auslassanschluss (1368) aufweist, der mit dem Abluftauslass (1070) verbunden ist; und
ein langsames Füllvorsteuerventil (1334), das zum Steuern des langsamen Füllventils (1300) und des zweiten Ablassventils (1332) eingerichtet ist.

2. Luftversorgungseinheit (1000) nach Anspruch 1, wobei die Luftversorgungseinheit (1000) ein zweites Absperrventil (1128) aufweist, das zwischen dem ersten Absperrventil (1028) und dem Luftauslass (1022) positioniert ist;
ein zweites Vorsteuerventil (1134), das zum Steuern des zweiten Absperrventils (1128) eingerichtet ist.

3. Luftversorgungseinheit (1000) nach Anspruch 1, wobei die Luftversorgungseinheit (1000) einen Niederdruck-Auslassdruckschalter (1200) aufweist, der in Fluidverbindung mit dem Luftauslass (1022) der Luftaufbereitungseinheit (1080) steht und zum Überwachen des Drucks an dem Luftauslass (1022) konfiguriert ist; und/oder wobei die Luftversorgungseinheit (1000) einen Hochdruck-Auslassdruckschalter (1200) aufweist, der in Fluidverbindung mit dem Luftauslass (1022) der Luftaufbereitungseinheit (1080) steht und zum Überwachen des Drucks an dem Luftauslass (1022) konfiguriert ist.

4. Luftversorgungseinheit (1000) nach Anspruch 2, wobei die Luftversorgungseinheit (1000) einen Niederdruck-Absperrventildruckschalter (1202) aufweist, der zum Überwachen des Drucks am Einlass des zweiten Absperrventils (1128) fluidverbunden ist; und/oder wobei die Luftversorgungseinheit (1000) einen Hochdruck-Absperrventildruckschalter (1202) aufweist, der zum Überwachen des Drucks am Einlass des zweiten Absperrventils (1128) fluidverbunden ist.

5. Luftversorgungseinheit (1000) nach Anspruch 1, wobei das erste und das zweite Ablassventil (1032, 1332) parallel zueinander angeordnet sind.

6. Luftversorgungseinheit (1000) nach Anspruch 2, wobei sich das erste und das zweite Absperrventil (1028, 1128) normalerweise in einer geschlossenen Stellung befinden und sich das erste Ablassventil (1032) normalerweise in einer offenen Stellung befindet; und/oder sich das erste und das zweite Vorsteuerventil (1034, 1134) normalerweise in einer geschlossenen Stellung befinden.

7. Luftversorgungseinheit (1000) nach Anspruch 1, wobei sich das langsame Füllventil (1300) normalerweise in einer geschlossenen Stellung und sich das zweite Ablassventil (1332) normalerweise in einer offenen Stellung befindet; und/oder sich das langsame Füllvorsteuerventil (1334) normalerweise in einer geschlossenen Stellung befindet.

8. Luftversorgungseinheit (1000) nach Anspruch 6 oder 7, wobei die normalerweise geschlossene Position durch eine Feder und Luftdruck in mindestens einer Fluidleitung bereitgestellt wird, die mit dem Einlass des ersten und zweiten Absperrventils (1028, 1128) und/oder des langsamen Füllventils (1300) in Fluidverbindung steht.

9. Luftversorgungseinheit (1000) nach Anspruch 1 oder 2, wobei sich das erste und das zweite Absperrventil (1028, 1128) und das erste Ablassventil (1032) in einem Ventilblock (2100) befinden und/oder wobei sich das langsame Füllventil (1300) und das zweite Ablassventil (1332) in einem Ventilblock (2100) befinden.

10. Luftversorgungseinheit (1000) nach Anspruch 8 oder 9, wobei sich die Vorsteuerventile (1034, 1134, 1334) und Druckschalter (1200, 1202) an der Außenseite des Ventilblocks (2100) befinden.

11. Luftversorgungseinheit (1000) nach Anspruch 1 oder 2, wobei das erste und das zweite Absperrventil (1028, 1128) und das erste Ablassventil (1032) Tellerventile sind; und/oder wobei das langsame Füllventil (1300) und das zweite Ablassventil (1332) Tellerventile sind.

12. Verfahren zur Prüfung der Sicherheit einer Luftversorgungseinheit (1000) nach Anspruch 7:
Betätigen des ersten Vorsteuerventils (1034) in einer vorbestimmten Reihenfolge für eine vorbestimmte Zeit;
Betätigen des zweiten Vorsteuerventils (1128) in einer vorbestimmten Reihenfolge für eine vorbestimmte Zeit;
Betätigen des langsamen Füllvorsteuerventils (1334) in einer vorbestimmten Reihenfolge für eine vorbestimmte Zeit;
Messen des Drucks zwischen dem ersten und dem zweiten Absperrventil (1028, 1128) unter Verwendung eines Niederdruckschalters (1202) bei jedem Schritt in der Reihenfolge und dessen Aufzeichnung als einen ersten Datensatz;
Messen des Drucks zwischen dem ersten und dem zweiten Absperrventil (1028, 1128) unter Verwendung eines Hochdruckschalters (1202) bei jedem Schritt in der Reihenfolge und dessen Aufzeichnung als einen zweiten Datensatz;
Messen des Drucks am Luftauslass (1022) unter Verwendung eines Niederdruckschalters (1200) bei jedem Schritt der Reihenfolge und dessen Aufzeichnung als einen dritten Datensatz;
Messen des Drucks am Luftauslass (1022) unter Verwendung eines Hochdruckschalters (1200) bei jedem Schritt in der Reihenfolge und dessen Aufzeichnung als einen vierten Datensatz;
Vergleichen des ersten, zweiten, dritten und vierten Datensatzes mit einem Prüfdatensatz, wobei der Prüfdatensatz Messungen eines sicheren Betriebs liefert;
einem Bediener anzeigen, dass die Luftversorgungseinheit (1000) sicher zu verwenden ist, wenn der erste, zweite, dritte und vierte Datensatz mit dem Prüfdatensatz übereinstimmen;
einem Bediener anzeigen, dass die Luftversorgungseinheit (1000) nicht sicher zu verwenden ist, wenn der erste, zweite, dritte und vierte Datensatz nicht mit dem Prüfdatensatz übereinstimmen.

13. Verfahren zum Prüfen der Sicherheit einer Luftversorgungseinheit (1000) nach Anspruch 12, das die folgende vorbestimmte Abfolge und vorbestimmten Zeiten aufweist:
• Beginnend mit dem ersten und zweiten Vorsteuerventil (1034, 1134) und dem langsamen Füllventil in geschlossener Stellung (1134);
• Öffnen des ersten Vorsteuerventils (1034) nach 200 ms;
• Schließen des ersten Vorsteuerventils (1034) nach 350 ms;
• Öffnen des ersten Vorsteuerventils (1034) nach 100 ms;
• Öffnen des langsamen Füllventils (1034) nach 100 ms;
• Schließen des langsamen Füllvorsteuerventils (1034) nach 500 ms;
• Öffnen des langsamen Füllvorsteuerventils (1334) nach 150 ms;
• Öffnen des zweiten Vorsteuerventils (1134) nach 500 ms;
• Schließen des zweiten Vorsteuerventils (1134) nach 300 ms;
• Schließen des ersten Vorsteuerventils (1034) nach 500 ms;
• Schließen des langsamen Füllvorsteuerventils (1334) nach 500 ms.

## Revendications

1. Unité d'alimentation en air (1000) pour applications à haute pression, comprenant :
une entrée d'air (1020), une sortie d'air (1022) et une sortie d'échappement (1070) ;
une vanne d'arrêt (1028) comportant un orifice d'entrée (1056) relié à l'entrée d'air (1020) et un orifice de sortie (1062) relié à la sortie d'air (1022) ;
une première vanne d'échappement (1032) comportant un orifice d'entrée (1066) relié à la sortie d'air (1022), la première vanne d'échappement (1032) comprenant un orifice de sortie (1068) relié à la sortie d'échappement (1070) ;
une vanne pilote (1034) agencée pour commander la vanne d'arrêt (1028) ;
dans laquelle la vanne pilote (1034) est configurée pour commander la vanne d'arrêt (1028) et commander la vanne d'échappement (1032),
**caractérisée en ce que** l'unité d'alimentation en air (1000) comprend en outre :
une vanne de remplissage lent (1300) reliée à la vanne d'arrêt (1028) et à la sortie d'air (1022) ;
un étrangleur (1310) qui commande le débit de fluide sortant de la vanne de remplissage lent (1300) ;
une deuxième vanne d'échappement (1332) reliée à l'orifice de sortie (1304) de la vanne de remplissage lent (1300) et à la sortie d'air (1022), ladite deuxième vanne d'échappement (1332) comprenant un orifice de sortie (1368) relié à la sortie d'échappement (1070) ; et
une vanne pilote de remplissage lent (1334) agencée pour commander la vanne de remplissage lent (1300) et la deuxième vanne d'échappement (1332).

2. Unité d'alimentation en air (1000) selon la revendication 1, dans laquelle l'unité d'alimentation en air (1000) comprend une deuxième vanne d'arrêt (1128) positionnée entre la première vanne d'arrêt (1028) et la sortie d'air (1022) ;
et une deuxième vanne pilote (1134) agencée pour commander la deuxième vanne d'arrêt (1128).

3. Unité d'alimentation en air (1000) selon la revendication 1, dans laquelle l'unité d'alimentation en air (1000) comprend un pressostat de sortie basse pression (1200) relié fluidiquement à la sortie d'air (1022) de l'unité de traitement d'air (1080) et configuré pour surveiller la pression au niveau de ladite sortie d'air (1022) ; et/ou dans laquelle l'unité d'alimentation en air (1000) comprend un pressostat de sortie haute pression (1200) relié fluidiquement à la sortie d'air (1022) de l'unité de traitement d'air (1080) et configuré pour surveiller la pression au niveau de ladite sortie d'air (1022).

4. Unité d'alimentation en air (1000) selon la revendication 2, dans laquelle l'unité d'alimentation en air (1000) comprend un pressostat de vanne d'arrêt basse pression (1202) relié fluidiquement pour surveiller la pression à l'entrée de la deuxième vanne d'arrêt (1128) ; et/ou dans laquelle l'unité d'alimentation en air (1000) comprend un pressostat de vanne d'arrêt haute pression (1202) relié fluidiquement pour surveiller la pression à l'entrée de la deuxième vanne d'arrêt (1128).

5. Unité d'alimentation en air (1000) selon la revendication 1, dans laquelle les première et deuxième vannes d'échappement (1032, 1332) sont disposées en parallèle l'une par rapport à l'autre.

6. Unité d'alimentation en air (1000) selon la revendication 2, dans laquelle les première et deuxième vannes d'arrêt (1028, 1128) sont normalement dans une position fermée et la première vanne d'échappement (1032) est normalement dans une position ouverte ; et/ou les première et deuxième vannes pilotes (1034, 1134) sont normalement dans une position fermée.

7. Unité d'alimentation en air (1000) selon la revendication 1, dans laquelle la vanne de remplissage lent (1300) est normalement dans une position fermée et la deuxième vanne d'échappement (1332) est normalement dans une position ouverte ; et/ou la vanne pilote de remplissage lent (1334) est normalement en position fermée.

8. Unité d'alimentation en air (1000) selon la revendication 6 ou 7, dans laquelle la position normalement fermée est assurée par un ressort et une pression d'air dans au moins une conduite de fluide qui est reliée fluidiquement à l'entrée de la première et de la deuxième vanne d'arrêt (1028, 1128) et/ou de la vanne de remplissage lent (1300).

9. Unité d'alimentation en air (1000) selon la revendication 1 ou 2, dans laquelle les première et deuxième vannes d'arrêt (1028, 1128) et la première vanne d'échappement (1032) sont situées dans un bloc de vannes (2100) et/ou dans laquelle la vanne de remplissage lent (1300) et la deuxième vanne d'échappement (1332) sont situées dans un bloc de vannes (2100).

10. Unité d'alimentation en air (1000) selon la revendication 8 ou 9, dans laquelle les vannes pilotes (1034, 1134, 1334) et les pressostats (1200, 1202) sont situés à l'extérieur du bloc de vannes (2100).

11. Unité d'alimentation en air (1000) selon la revendication 1 ou 2, dans laquelle les première et deuxième vannes d'arrêt (1028, 1128) et la première vanne d'échappement (1032) sont des soupapes à champignon ; et/ou dans laquelle la vanne de remplissage lent (1300) et la deuxième vanne d'échappement (1332) sont des soupapes à champignon.

12. Procédé de test de la sécurité d'une unité d'alimentation en air (1000) selon la revendication 7 :
actionner la première vanne pilote (1034) dans une séquence prédéterminée pendant une durée prédéterminée ;
actionner la deuxième vanne pilote (1128) dans une séquence prédéterminée pendant une durée prédéterminée ;
actionner la vanne pilote de remplissage lent (1334) dans une séquence prédéterminée pendant une durée prédéterminée ;
mesurer la pression entre les première et deuxième vannes d'arrêt (1028, 1128) à l'aide d'un pressostat basse pression (1202) à chaque étape de la séquence et l'enregistrer en tant que premier ensemble de données ;
mesurer la pression entre les première et deuxième vannes d'arrêt (1028, 1128) à l'aide d'un pressostat haute pression (1202) à chaque étape de la séquence et l'enregistrer en tant que deuxième ensemble de données ;
mesurer la pression à la sortie d'air (1022) à l'aide d'un pressostat basse pression (1200) à chaque étape de la séquence et l'enregistrer en tant que troisième ensemble de données ;
mesurer la pression à la sortie d'air (1022) à l'aide d'un pressostat haute pression (1200) à chaque étape de la séquence et l'enregistrer en tant que quatrième ensemble de données ;
comparer les premier, deuxième, troisième et quatrième ensembles de données à un ensemble de données de test, l'ensemble de données de test donnant des mesures de fonctionnement sûr ;
indiquer à un opérateur que l'unité d'alimentation en air (1000) peut être utilisée en toute sécurité si les premier, deuxième, troisième et quatrième ensembles de données correspondent à l'ensemble de données de test ;
indiquer à un opérateur que l'unité d'alimentation en air (1000) ne peut pas être utilisée en toute sécurité si les premier, deuxième, troisième et quatrième ensembles de données ne correspondent pas à l'ensemble de données de test.

13. Procédé de test de la sécurité d'une unité d'alimentation en air (1000) selon la revendication 12, comprenant la séquence prédéterminée et les temps prédéterminés consistant à :
• Commencer avec les premières et deuxième vannes pilotes (1034, 1134) et la vanne de remplissage lent en position fermée (1134) ;
• Ouvrir la première vanne pilote (1034) après 200 ms ;
• Fermer la première vanne pilote (1034) après 350 ms ;
• Ouvrir la première vanne pilote (1034) après 100 ms ;
• Ouvrir la vanne de remplissage lent (1034) après 100 ms ;
• Fermer la vanne pilote de remplissage lent (1034) après 500 ms ;
• Ouvrir la vanne pilote de remplissage lent (1334) après 150 ms ;
• Ouvrir la deuxième vanne pilote (1134) après 500 ms ;
• Fermer la deuxième vanne pilote (1134) après 300 ms ;
• Fermer la première vanne pilote (1034) après 500 ms ;
• Fermer la vanne pilote de remplissage lent (1334) après 500 ms.
